(19) **Europäisches Patentamt / European Patent Office / Office européen des brevets**

(11) **EP 3 609 262 A1**

(12) **EUROPEAN PATENT APPLICATION**
published in accordance with Art. 153(4) EPC

(43) Date of publication:
**12.02.2020 Bulletin 2020/07**

(21) Application number: **18818497.2**

(22) Date of filing: **12.06.2018**

(51) Int Cl.:
**H04W 72/04** (2009.01)     **H04L 1/18** (2006.01)

(86) International application number:
**PCT/CN2018/090885**

(87) International publication number:
**WO 2018/228394 (20.12.2018 Gazette 2018/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.06.2017   CN 201710453514**

(71) Applicant: **Huawei Technologies Co., Ltd.**
**Longgang District**
**Shenzhen, Guangdong 518129 (CN)**

(72) Inventors:
• **YAN, Zhiyu**
  **Shenzhen**
  **Guangdong 518129 (CN)**
• **LYU, Yongxia**
  **Shenzhen**
  **Guangdong 518129 (CN)**

(74) Representative: **Pfenning, Meinig & Partner mbB**
**Patent- und Rechtsanwälte**
**Joachimsthaler Straße 10-12**
**10719 Berlin (DE)**

(54) **METHOD AND APPARATUS FOR SENDING CONTROL INFORMATION, OR METHOD AND APPARATUS FOR RECEIVING CONTROL INFORMATION**

(57)     A control information sending or receiving method and an apparatus are provided, so as to provide a PUCCH resource determining manner. The sending method includes: determining, by a terminal device from M uplink control channels, a first uplink control channel corresponding to first information; and sending, by the terminal device, uplink control information to a network device over the first uplink control channel in a first time unit, where configuration information of the first uplink control channel matches the first information, and the first information is used to indicate configuration information of the first time unit; or a time unit set corresponding to the first uplink control channel correspond to the first information, and the first information is used to indicate a time unit set to which the first time unit belongs; or the first uplink control channel belongs to a first uplink control channel group, the first uplink control channel group includes N uplink control channels, the N uplink control channels match the first information, and the N uplink control channels are a subset of the M uplink control channels, where N is a positive integer.

FIG. 5

**Description**

This application claims priority to Chinese Patent Application No. 201710453514.6, filed with the Chinese Patent Office on June 15, 2017 and entitled "CONTROL INFORMATION SENDING OR RECEIVING METHOD AND APPARATUS", which is incorporated herein by reference in its entirety.

**TECHNICAL FIELD**

Embodiments of the present invention relate to the field of communications technologies, and in particular, to a control information sending or receiving method and an apparatus.

**BACKGROUND**

In a long term evolution (Long Term Evolution, LTE) system, to ensure efficiency in physical uplink control channel (Physical Uplink Control Channel, PUCCH) transmission, different PUCCH formats are designed for a terminal device to send uplink control information (Uplink Control Information, UCI). Currently, there are nine PUCCH formats in the LTE system for the terminal device to send the UCI. Manners of sending the uplink control information by the UE by using different PUCCH formats and/or locations of used demodulation reference signals are different. Based on a type of the UCI that is fed back or a feedback amount of the UCI and with reference to information about a PUCCH resource configured by a base station, the UE can determine which PUCCH resource should be selected, so as to transmit the corresponding uplink control information on the determined PUCCH resource.

However, in a fifth generation mobile communications technology (Fifth Generation, 5G) new radio (New Radio, NR) system, more PUCCH formats may be defined, and at least one resource may be configured for each PUCCH format. In this case, if the base station continues to notify, in an indication manner, the UE of a PUCCH resource to be selected, relatively high overheads are required. For example, if 13 PUCCH formats are defined, and the base station configures four PUCCH resources for each of the PUCCH formats, a total of 52 PUCCH resources are configured. In this case, if the base station is to indicate, by sending a message, which PUCCH resource is to be selected by the UE, overheads of the message are at least $\lceil \log_2 52 \rceil = 6$ bits. It can be learned that the overheads are quite high, and this causes relatively heavy load to the system.

Therefore, when PUCCH resources in a plurality of formats are configured for the UE in the NR system, how to determine a PUCCH resource for feeding back UCI is a problem that needs to be resolved in the present invention.

**SUMMARY**

Embodiments of the present invention provide a control information sending or receiving method and an apparatus, so as to provide a PUCCH resource determining manner.

According to a first aspect, a control information sending method is provided, and the method may be performed by a terminal device. The method includes: determining, by the terminal device from M uplink control channels, a first uplink control channel corresponding to first information, where M is an integer greater than or equal to 2; and sending, by the terminal device, uplink control information to a network device over the first uplink control channel in a first time unit. Configuration information of the first uplink control channel matches the first information, and the first information is used to indicate configuration information of the first time unit; or a time unit set corresponding to the first uplink control channel matches the first information, and the first information is used to indicate a time unit set to which the first time unit belongs; or the first uplink control channel belongs to a first uplink control channel group, the first uplink control channel group includes N uplink control channels, the N uplink control channels match the first information, and the N uplink control channels are a subset of the M uplink control channels, where N is a positive integer; and the first information is used to indicate configuration information of the first time unit, or the first information is used to indicate a time unit set to which the first time unit belongs.

According to a second aspect, a control information transmission method is provided. The method may be performed by a network device, and the network device is, for example, a base station. The method includes: determining, by the network device from M uplink control channels, a first uplink control channel corresponding to first information, where M is an integer greater than or equal to 2; and receiving, by the network device over the first uplink control channel in a first time unit, uplink control information sent by a terminal device. Configuration information of the first uplink control channel matches the first information, and the first information is used to indicate configuration information of the first time unit; or a time unit set corresponding to the first uplink control channel matches the first information, and the first information is used to indicate a time unit set to which the first time unit belongs; or the first uplink control channel belongs to a first uplink control channel group, the first uplink control channel group includes N uplink control channels, the N uplink control channels match the first information, and the N uplink control channels are a subset of the M uplink control channels, where the first information is used to indicate configuration information of the first time unit, or the first information is used to indicate a time unit set to which the first time unit belongs.

According to a third aspect, a control channel determining method is provided. The method includes:

determining, by a processor from M uplink control channels, a first uplink control channel corresponding to first information, where M is an integer greater than or equal to 2; and mapping, by the processor, uplink control information to the first uplink control channel in a first time unit. Configuration information of the first uplink control channel matches the first information, and the first information is used to indicate configuration information of the first time unit; or a time unit set corresponding to the first uplink control channel matches the first information, and the first information is used to indicate a time unit set to which the first time unit belongs; or the first uplink control channel belongs to a first uplink control channel group, the first uplink control channel group includes N uplink control channels, the N uplink control channels match the first information, and the N uplink control channels are a subset of the M uplink control channels, where N is a positive integer; and the first information is used to indicate configuration information of the first time unit, or the first information is used to indicate a time unit set to which the first time unit belongs.

According to a fourth aspect, a control channel determining method is provided. The method includes: determining, by a processor from M uplink control channels, a first uplink control channel corresponding to first information, where M is an integer greater than or equal to 2; and decoding, by the processor, uplink control information on the first uplink control channel in a first time unit. Configuration information of the first uplink control channel matches the first information, and the first information is used to indicate configuration information of the first time unit; or a time unit set corresponding to the first uplink control channel matches the first information, and the first information is used to indicate a time unit set to which the first time unit belongs; or the first uplink control channel belongs to a first uplink control channel group, the first uplink control channel group includes N uplink control channels, the N uplink control channels match the first information, and the N uplink control channels are a subset of the M uplink control channels, where the first information is used to indicate configuration information of the first time unit, or the first information is used to indicate a time unit set to which the first time unit belongs.

In the embodiments of the present invention, configuration information of the uplink control channel is known, and the terminal device may have a knowledge of a first time unit occupied by the uplink control channel, so that the terminal device can determine the first information. In this case, the terminal device may determine the to-be-used first uplink control channel based on the known configuration information of the uplink control channel and the first information; or the terminal device may determine the first uplink control channel group based on the known configuration information of the uplink control channel and the first information, determine the to-be-used first uplink control channel from the first uplink control channel group, and then send the uplink control information over the first uplink control channel. Selecting an uplink control channel may be understood as selecting a resource of the uplink control channel. In other words, the embodiments of the present invention resolve a problem as to how the terminal device determines a resource used by a to-be-transmitted PUCCH when a plurality of resources are configured for the terminal device. In addition, the technical solution provided in the embodiments of the present invention does not require excessive indications of the network device, thereby reducing system overheads.

In a possible design, the configuration information of the first time unit is used to indicate a time length and/or a location of a resource used for uplink transmission in the first time unit, and the configuration information of the first uplink control channel is used to indicate a time length and/or a location of a resource used for uplink transmission in a time unit for which the first uplink control channel is feasible.

Content that may be included in the uplink configuration information of the first time unit is provided. Certainly, the embodiments of the present invention are not limited thereto.

In a possible design, before the determining, by the terminal device from M uplink control channels, a first uplink control channel corresponding to first information, the method further includes: receiving, by the terminal device, configuration information that is of the first uplink control channel and that is sent by the network device, where the configuration information includes the configuration information of the first uplink control channel, and/or includes information about the time unit set corresponding to the first uplink control channel. Correspondingly, before the determining, by the network device from M uplink control channels, a first uplink control channel corresponding to first information, the method further includes: sending, by the network device, a configuration message about the first uplink control channel to the terminal device, where the configuration message includes the configuration information of the first uplink control channel, and/or includes information about the time unit set corresponding to the first uplink control channel.

The network device may generate the configuration information of the first uplink control channel, and send the configuration information of the first uplink control channel to the terminal device, so that the terminal device can determine the first uplink control channel based on the configuration information of the first uplink control channel and the first information.

In a possible design, the first uplink control channel belongs to the first uplink control channel group. In this case, before sending the uplink control information to the network device over the first uplink control channel in the first time unit, the terminal device further receives second information; and the terminal device determines the first uplink control channel from the first uplink control channel group based on the second information. Correspondingly, before receiving, over the first uplink control channel in the first time unit, the uplink control information sent by the terminal device, the network device further sends second information to the terminal device, where the second information is used to instruct the terminal device to determine the first uplink control channel from the first uplink control channel group.

If the terminal device or the network device determines, from the M uplink control channels, a plurality of uplink control channels corresponding to the first information, that is, determines the first uplink control channel group, the terminal device or the network device further needs to determine the first uplink control channel from the first uplink control channel group. In the embodiments of the present invention, the network device may further send the second information to the terminal device, and the second information may be used to instruct the terminal device to determine the first uplink control channel from the first uplink control channel group. In this manner, the terminal device can easily and finally determine the first uplink control channel. In addition, the network device only needs to indicate an uplink control channel for the terminal device from the first uplink control channel group, and does not need to indicate an uplink control channel for the terminal device from all uplink control channels allocated to the terminal device, thereby reducing system overheads.

In a possible design, the uplink control channels included in the first uplink control channel group have a same format.

Because all the uplink control channels included in the first uplink control channel group are uplink control channels corresponding to the first information, the uplink control channels included in the first uplink control channel group may have the same format.

In a possible design, the at least two uplink control channels are uplink control channels that are configured by the network device for the terminal device and that are used to send hybrid automatic repeat request-acknowledgement information, and the uplink control information includes the hybrid automatic repeat request-acknowledgement information.

In a possible design, the at least two uplink control channels are uplink control channels that are configured by the network device for the terminal device and that are used to send periodic channel state information, and the uplink control information includes the periodic channel state information.

Several implementations of the uplink control information are provided, and several purposes of the uplink control channel are also correspondingly provided. Certainly, in the embodiments of the present invention, the purposes of the uplink control channel and the implementations of the uplink control information are not limited thereto.

According to a fifth aspect, a terminal device is provided. The terminal device has functions for implementing the terminal device in the foregoing method designs. The functions may be implemented by hardware, or may be implemented by hardware executing corresponding software. The hardware or the software includes one or more units corresponding to the foregoing functions.

In a possible design, a specific structure of the terminal device may include a processor and a transmitter. Optionally, the terminal device may further include a receiver. The processor, the transmitter, and the receiver may perform corresponding functions in the method provided in the first aspect or any possible design of the first aspect.

According to a sixth aspect, a network device is provided. The network device has functions for implementing the network device in the foregoing method designs. The functions may be implemented by hardware, or may be implemented by hardware executing corresponding software. The hardware or the software includes one or more units corresponding to the foregoing functions.

In a possible design, a specific structure of the network device may include a processor and a receiver. Optionally, the network device may further include a transmitter. The processor, the transmitter, and the receiver may perform corresponding functions in the method provided in the second aspect or any possible design of the second aspect.

According to a seventh aspect, a communications apparatus is provided. The communications apparatus may be a component in the terminal device in the foregoing method designs, or may be a chip module disposed in the terminal device. The communications apparatus includes: a memory, configured to store computer executable program code; a communications interface; and a processor, where the processor is coupled to the memory and the communications interface. The program code stored in the memory includes an instruction, and when the processor executes the instruction, the instruction enables the communications apparatus to perform the method in any one of the third aspect or the possible designs of the third aspect.

According to an eighth aspect, a communications apparatus is provided. The communications apparatus may be a component in the network device in the foregoing method designs, or may be a chip module disposed in the network device. The communications apparatus includes: a memory, configured to store computer executable program code; a communications interface; and a processor, where the processor is coupled to the memory and the communications interface. The program code stored in the memory includes an instruction, and when the processor executes the instruction, the instruction enables the communications apparatus to perform the method in any one of the fourth aspect or the possible designs of the fourth aspect.

According to a ninth aspect, a computer storage medium is provided, configured to store a computer software instruction used by the communications apparatus described in the fifth aspect or the communications apparatus described in the seventh aspect, and including a program designed for the terminal device to perform any one of the first aspect or the possible designs of the first aspect, or any one of the third aspect or the possible designs of the third aspect.

According to a tenth aspect, a computer storage medium is provided, configured to store a computer software instruction used by the communications apparatus described in the sixth aspect or the communications apparatus described in the eighth aspect, and including a program designed for the network device to perform any one of the second aspect or the possible designs of the second aspect, or any one of the fourth aspect or the possible designs of the fourth aspect.

According to an eleventh aspect, a computer program product including an instruction is provided, where when the computer program product runs on a computer, the computer is enabled to execute a program designed for the terminal device in any one of the first aspect or the possible designs of the first aspect, or any one of the third aspect or the possible designs of the third aspect.

According to a twelfth aspect, a computer program product including an instruction is provided, where when the computer program product runs on a computer, the computer is enabled to execute a program designed for the network device in any one of the second aspect or the possible designs of the second aspect, or any one of the fourth aspect or the possible designs of the fourth aspect.

In the embodiments of the present invention, the terminal device may determine the to-be-used first uplink control channel based on the known configuration information of the uplink control channel and the first information; or the terminal device may determine the first uplink control channel group based on the known configuration information of the uplink control channel and the first information, determine the to-be-used first uplink control channel from the first uplink control channel group based on the second information, and then send the uplink control information over the first uplink control channel. Selecting an uplink control channel may be understood as selecting a resource of the uplink control channel. In other words, the embodiments of the present invention resolve a problem as to how the terminal device determines a resource used by a to-be-transmitted PUCCH when a plurality of resources are configured for the terminal device. In addition, the technical solution provided in the embodiments of the present invention does not require excessive indications of the network device, thereby reducing system overheads.

## BRIEF DESCRIPTION OF DRAWINGS

FIG. 1A schematically illustrates a subframe, a slot, and a mini-slot when a subcarrier spacing is 15 kHz;
FIG. 1B schematically illustrates a slot and a mini-slot when a subcarrier spacing is 30 kHz;
FIG. 1C schematically illustrates a slot and a mini-slot when a subcarrier spacing is 60 kHz;
FIG. 2A is a schematic structural diagram of a self-contained slot;
FIG. 2B is a schematic structural diagram of another self-contained slot;
FIG. 3 is a schematic diagram of symbols that need to be used by different terminal devices in one slot;
FIG. 4 is a schematic diagram of an application scenario according to an embodiment of the present invention;
FIG. 5 is a flowchart of a control information transmission method according to an embodiment of the present invention;
FIG. 6 is a schematic structural diagram of a terminal device according to an embodiment of the present invention;
FIG. 7 is a schematic structural diagram of a network device according to an embodiment of the present invention; and
FIG. 8 is a schematic structural diagram of a communications apparatus according to an embodiment of the present invention.

## DESCRIPTION OF EMBODIMENTS

To make the objectives, technical solutions, and advantages of embodiments of the present invention clearer, the following further describes the embodiments of the present invention in detail with reference to the accompanying drawings.

Some terms in the embodiments of the present invention are described below, to help persons skilled in the art have a better understanding.

(1) A terminal device includes a device that provides a user with voice and/or data connectivity, for example, may include a handheld device with a wireless connection function, or a processing device connected to a wireless modem. The terminal device may communicate with a core network by using a radio access network (Radio Access Network, RAN), and exchange voice and/or data with the RAN. The terminal device may include user equipment (user equipment, UE), a wireless terminal device, a mobile terminal device, a subscriber unit (Subscriber Unit), a subscriber station (Subscriber Station), a mobile station (Mobile Station), a mobile (Mobile), a remote station (Remote Station), an access point (Access Point, AP), a remote terminal device (Remote Terminal), an access terminal device (Access Terminal), a user terminal device (User Terminal), a user agent (User Agent), a user device (User Device), or the like. For example, the terminal device may include a mobile phone (or referred to as a "cellular" phone), a computer with a mobile terminal device, a portable, pocket-sized, handheld, computer built-in, or in-vehicle mobile apparatus, or an intelligent wearable device. For example, the terminal device may be a personal communications service (Personal Communication Service, PCS) phone, a cordless telephone set, a session initiation protocol (Session Initiation Protocol, SIP) phone, a wireless local loop (Wireless Local Loop, WLL) station, a personal digital assistant (Personal Digital Assistant, PDA), a smartwatch, a smart helmet, smart glasses, a smart band, or another device. The terminal device further includes a limited device, for example, a device with relatively low power consumption, a device with a limited storage capability, or a device with a limited computing capability. For example, the terminal device includes an information sensing device such as a barcode, radio frequency identification (Radio Frequency Identification, RFID), a sensor, a global positioning system (Global Positioning System, GPS), or a laser scanner.

(2) A network device includes, for example, a base station (for example, an access point), may be a device that communicates with a wireless terminal device over an air interface by using one or more cells in an access network. The base station may be configured to perform mutual conversion on a received over-the-air frame and a received internet protocol (IP) packet, and serve as a router between the terminal device and the other parts in the access network, where the other parts in the access network may include an IP network. The base station may further coordinate attribute management of the air interface. For example, the base station may be an evolved NodeB (NodeB, eNB or e-NodeB, evolutional Node B) in an LTE system or an LTE-advanced (LTE-Advanced, LTE-A) system, or may be a next generation NodeB (next generation node B, gNB) in an NR system. This is not limited in the embodiments of the present invention.

(3) An uplink control channel is used to carry control information. In this specification, a type of the uplink control channel is not limited. For example, the uplink control channel may be a PUCCH or an enhanced physical uplink control channel (Enhanced Physical Uplink Control Channel, EPDCCH), or may be another uplink control channel used to transmit control information.

(4) The terms "system" and "network" may be used interchangeably in the embodiments of the present invention. "Plurality" means two or more. In view of this, "plurality" may also be understood as "at least two" in the embodiments of the present invention. The term "and/or" describes an association relationship between associated objects and indicates that three relationships may exist. For example, A and/or B may indicate the following three cases: Only A exists, both A and B exist, and only B exists. In addition, the character "/", unless otherwise specified, generally indicates an "or" relationship between the associated objects.

The foregoing describes some concepts used in the embodiments of the present invention, and the following describes a technical background of the embodiments of the present invention.

In an NR system, a plurality of subcarrier spacings are supported to meet different service requirements. In frequency domain, a calculation manner of the subcarrier spacing supported in the NR system is $f_{sc} = f_0 * 2^m$, where $f_0 = 15$ kHz, and m is an integer. In time domain, the following time units are provided, including:

Subframe (subframe): A length of one subframe is 1 ms, and for a structure (numerology) of a 15 kHz subcarrier spacing, the subframe includes 14 orthogonal frequency division multiplexing (Orthogonal Frequency Division Multiplexing, OFDM) symbols. In one subframe, for various numerologies of a 15 kHz subcarrier spacing or a subcarrier spacing of more than 15 kHz, symbol boundaries are aligned. Unless otherwise specified, all "symbols" in the following descriptions are OFDM symbols.

Slot (slot): A slot is a time length of a possible scheduling unit. One slot includes y symbols for a currently used numerology. One subframe includes an integer quantity of slots. For example, when the subcarrier spacing is less than 60 kHz, y = 7; or when the subcarrier spacing is greater than 60 kHz, y = 14.

Mini-slot (Mini-slot): A mini-slot is a minimum time length of a scheduling unit. One mini-slot may include OFDM symbols fewer than y symbols for a currently used numerology.

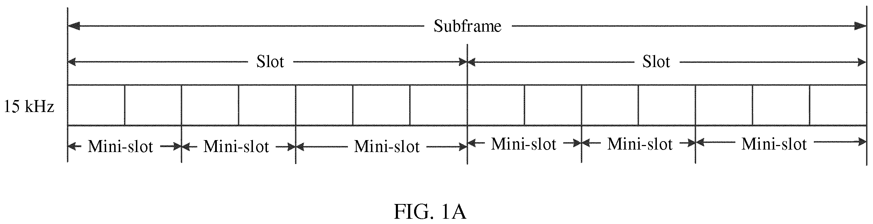

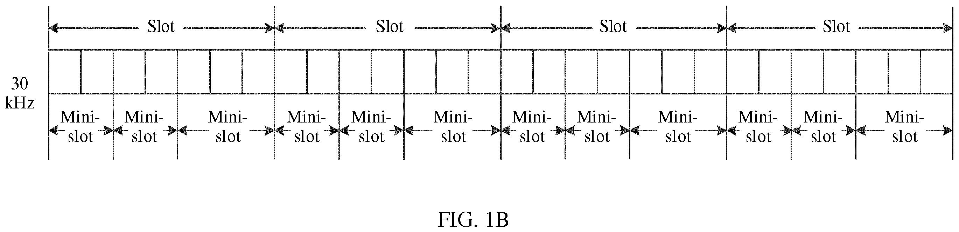

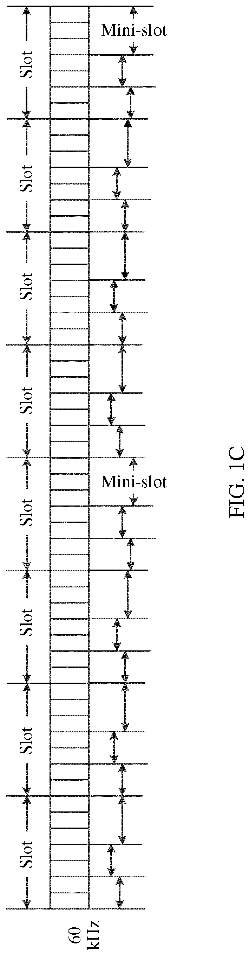

FIG. 1A schematically illustrates a subframe, a slot, and a mini-slot when a subcarrier spacing is 15 kHz, FIG. 1B schematically illustrates a slot and a mini-slot when a subcarrier spacing is 30 kHz, and FIG. 1C schematically illustrates a slot and a mini-slot when a subcarrier spacing is 60 kHz.

One slot may be all used for downlink (DL) transmission, or may be all used for uplink (UL) transmission, or may be partly used for uplink transmission and partly used for downlink transmission. A shorter message round-trip time (Round Trip Time, RTT) is required in the NR system. Therefore, a format of one self-contained slot in which DL, UL, and a guard period (Guard Period, GP) are all included is to be applied to the NR system.

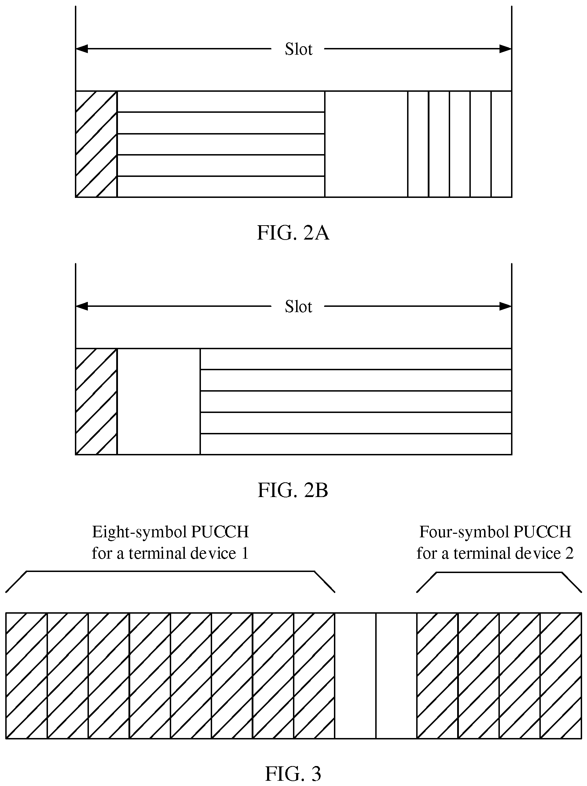

FIG. 2A is a schematic diagram of a self-contained slot. To be specific, DL, UL, and a GP are all included in the slot. In the slot shown in FIG. 2A, a part shaded with slashes represents downlink control information, a part shaded with horizontal lines represents downlink data, a part shaded with vertical lines represents hybrid automatic repeat request-acknowledgement (Hybrid Automatic Repeat reQuest ACK, HARQ-ACK) feedback corresponding to the downlink data, and a blank part represents the GP. The downlink control information and the downlink data are the DL, and the HARQ-ACK is the UL.

FIG. 2B is a schematic diagram of another self-contained slot. In the slot shown in FIG. 2B, a part shaded with slashes represents downlink control information, a part shaded with horizontal lines represents uplink data, and a blank part represents a GP. The downlink control information is DL, and the uplink data is UL.

Therefore, a quantity of downlink symbols and a quantity of uplink symbols in 7 symbols or 14 symbols included in one slot vary depending on different requirements of downlink transmission and uplink transmission. In the NR system, a base station is allowed to configure, for a terminal device, a quantity of symbols used for uplink transmission and/or downlink transmission in a slot.

Currently, downlink data is transmitted based on base station scheduling. A specific scheduling procedure is as follows: The base station sends a downlink control channel, for example, a physical downlink control channel (Physical Downlink Control Channel, PDCCH) or an enhanced physical downlink control channel (Enhanced Physical Downlink Control Channel, EPDCCH), where the downlink control channel may carry scheduling information of a physical downlink shared channel (Physical Downlink Shared Channel, PDSCH) or a PUSCH, and the scheduling information includes, for example, control information such as resource allocation information or a modulation and coding scheme. The terminal device detects the downlink control channel, and performs downlink data channel receiving or uplink data channel sending based on the scheduling information carried by the detected downlink control channel.

When HARQ transmission is supported, if the terminal device correctly receives downlink data, the terminal device feeds back an acknowledgement (ACK) to the base station on a PUCCH; or if the terminal device does not correctly receive downlink data, the terminal device feeds back a negative acknowledgement (NACK) to the base station on a PUCCH. The ACK and the NACK are collectively referred to as a HARQ-ACK. If the base station receives NACK feedback on the downlink data from the terminal device, the base station may perform retransmission scheduling on the downlink data. However, if the base station receives ACK feedback on the downlink data from the terminal device, and there is no more downlink data to be transmitted, the base station may suspend scheduling a downlink resource for the terminal device.

The PUCCH resource used by the terminal device to send the HARQ-ACK information may be a resource configured by the base station for the terminal device. The configured PUCCH resource includes at least one of a time and a frequency occupied by the PUCCH, a reference signal sequence, and the like. In addition, the PUCCH resource may further include a candidate value of a time interval between the PUCCH and the PDSCH, or include a candidate value of a time interval between the PUCCH and the PDCCH. When scheduling the downlink data for the terminal device, the base station may indicate, in the downlink control channel, a time location of the PUCCH used to feed back the HARQ-ACK corresponding to the downlink data. For example, the time location is indicated as one of candidate values of the time interval between the PUCCH and the PDSCH, or the time location is indicated as one of candidate values of the time interval between the PUCCH and the PDCCH, or the time location is directly indicated as a value of the time interval between the PUCCH and the PDCCH.

A quantity of HARQ-ACKs that need to be fed back by the terminal device on the PUCCH also varies depending on downlink resources configured by the base station for the terminal device or a quantity of downlink data scheduled by the base station for the terminal device. To ensure PUCCH transmission efficiency, PUCCH resources in different formats or with different resource quantities need to be configured for the terminal device. For example, in an LTE system, each PUCCH resource has a specific PUCCH format. Currently, there are a total of nine PUCCH formats such as formats 1/1a/1b/2/2a/2b/3/4/5 in the LTE system that are used by the terminal device to send uplink control information. Manners in which the terminal device sends the uplink control information by using different PUCCH formats, locations of used demodulation reference signals, and/or the like are different.

In the LTE system, for HARQ-ACK feedback, the UE determines a PUCCH resource based on a control channel of downlink data corresponding to a HARQ-ACK; or a plurality of PUCCH resources configured by the base station for the UE are different, and the UE determines, based on a feedback quantity of HARQ-ACKs to be fed back and indication information of the base station, a PUCCH resource used for HARQ-ACK feedback.

PUCCH resources in different formats in the LTE system are mainly designed to adapt to different feedback amounts of uplink control information. For example, some PUCCH formats support feedback of low-payload uplink control information, such as 1 bit or 2 bits; some PUCCH formats support feedback of medium-payload uplink control information, for example, 3 bits to 22 bits; and some PUCCH formats support feedback of high-payload uplink control information, for example, more than 22 bits.

A plurality of PUCCH formats are to be defined in the NR system, and specifically, include a short PUCCH and a long PUCCH in terms of a quantity of symbols included. The short PUCCH includes one symbol or two symbols. A quantity of symbols included in the long PUCCH may be some or all of the following set of symbol quantities: {4, 5, 6, 7, 8, 9, 10, 11, 12, 13, 14}. Each PUCCH format corresponds to at least one PUCCH resource, and one PUCCH resource includes a time resource and a frequency resource, or may further include a code resource. Different from that in the LTE system, the plurality of PUCCH formats in the NR system cannot be distinguished based on supported uplink control information feedback amounts. For example, capacities of PUCCH resources of two different PUCCH formats may be the same or similar.

In one slot, short PUCCHs of different terminal devices may be multiplexed in a time division manner. The long PUCCH may be transmitted in an uplink slot, or transmitted in a UL part of a slot. Symbols occupied by the long PUCCH may be consecutive or inconsecutive. In the NR system, a plurality of PUCCH formats with different symbol lengths may be configured for the terminal device for the following reasons:

(1) Configuration of DL, UL, and a GP included in one slot in the NR system is uncertain. For example, a length of one slot is 14 symbols, and a symbol occupied by UL in the slot may be any symbol in {14, 12, 11, 10, 9, 8, 7, 6, 5, 4, 3, 2, 1}. If the UL in the slot occupies two symbols, it is impossible to send a PUCCH in a three-symbol length format in the slot. Therefore, it is necessary to configure PUCCH resources in a plurality of formats (symbol lengths) for the terminal device.

(2) PUCCH formats with different symbol lengths can meet requirements of the terminal device for different coverage (channel quality), services (control information lengths and bit error rates for different service feedback may be different), and the like. Control information of different lengths may need to be sent in a system at the same time. Therefore, to avoid mutual interference, symbols used by the terminal device are also different. For example, when a length of one slot in a frequency division duplex (Frequency Division Dual, FDD) system is 14 symbols, a terminal device 1 needs to use a PUCCH in an eight-symbol format in the slot to meet a coverage or service requirement of the terminal device 1, and a terminal device 2 needs to use a PUCCH in a four-symbol format to meet a coverage or requirement of the terminal device 2, as shown in FIG. 3. If the PUCCH for the terminal device 1 and the PUCCH resource for the terminal device 2 are multiplexed in a TDM manner, two uplink symbols in the slot are in an idle state, and this is quite wasteful in terms of resource utilization efficiency of the slot. Therefore, it is necessary to configure PUCCH resources for some other terminal devices, for example, a PUCCH resource for a terminal device 3, on the symbols in the idle state, that is, the slot also supports a PUCCH resource of a two-symbol length.

Alternatively, in the slot, a terminal device 1 needs to use an eight-symbol PUCCH to meet a coverage or service requirement of the terminal device 1, and a terminal device 2 needs to use a six-symbol PUCCH to meet a coverage or requirement of the terminal device 2. Even if a terminal device 3 uses a PUCCH in a four-symbol format to meet a coverage or service requirement of the terminal device 3, considering that two or more terminal devices may be multiplexed into the eight-symbol PUCCH to send the PUCCH, the eight-symbol PUCCH may also be configured for the terminal device 3, to improve PUCCH resource utilization efficiency.

Therefore, considering efficiency in resource multiplexing and resource utilization with other terminal devices, it is necessary to configure PUCCH resources in a plurality of formats for the terminal device. Capacities of the PUCCH resources in the plurality of PUCCH formats may be the same or similar, and the UE cannot determine a PUCCH resource based on a type of UCI that is fed back or a feedback amount of UCI. If 13 PUCCH formats are defined in the NR system, and the base station configures four PUCCH resources for each of the PUCCH formats, a total of 52 PUCCH resources are configured. In this case, if the base station is to indicate, by sending a message, which PUCCH resource is to be selected by the terminal device, overheads of the message are at least $\lceil \log_2 52 \rceil = 6$ bits. It can be learned that the overheads are quite high, and this causes relatively heavy load to the system.

Therefore, when the PUCCH resources in the plurality of formats are configured for the UE in the NR system, how to determine a PUCCH resource for feeding back UCI is a problem that needs to be resolved in the present invention.

In view of this, the embodiments of the present invention provide a new control information transmission method. In the embodiments of the present invention, a terminal device can determine, based on only preconfigured configuration information of each uplink control channel and first information, a first uplink control channel that needs to be used, and then send uplink control information over the first uplink control channel. Selecting an uplink control channel may be understood as selecting a resource of the uplink control channel. In other words, the embodiments of the present invention resolve a problem as to how the terminal device determines a resource used by a to-be-transmitted PUCCH when a plurality of resources are configured for the terminal device. In addition, the technical solution provided in the embodiments of the present invention does not require excessive indications of a network device, thereby reducing system overheads.

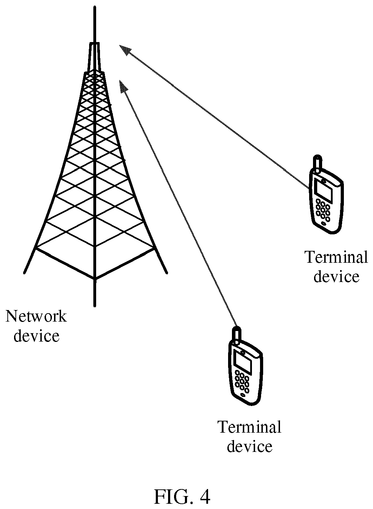

Referring to FIG. 4, an application scenario of an embodiment of the present invention is described. FIG. 4 includes a network device and two terminal devices. The terminal device may transmit uplink control information to the network device over an uplink control channel. The network device in FIG. 4 is, for example, a base station.

Technical solutions provided in this specification may be applied to a 5G NR system (briefly referred to as an NR system below), or may be applied to a next generation mobile communications system or another similar mobile communications system.

The technical solutions provided in the embodiments of the present invention are described below with reference to the accompanying drawings.

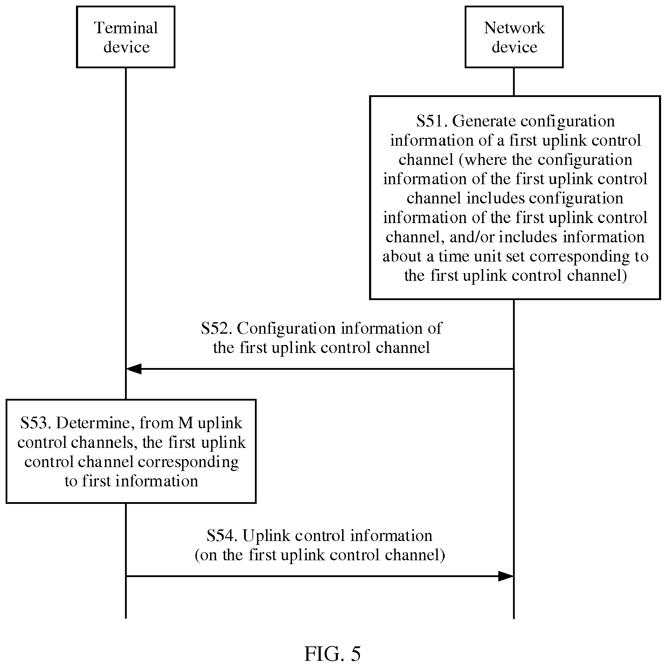

Referring to FIG. 5, an embodiment of the present invention provides a control information sending and receiving method. In the following, an example in which the method provided in this embodiment of the present invention is applied to the application scenario shown in FIG. 4 is used for description.

S51. A network device generates configuration information of a first uplink control channel, where the configuration information of the first uplink control channel includes configuration information of the first uplink control channel, and/or includes information about a time unit set corresponding to the first uplink control channel.

In this embodiment of the present invention, the network device may configure a plurality of uplink control channels for a terminal device, and the network device may generate, for each configured uplink control channel, configuration information of the uplink control channel. Therefore, the network device may generate a plurality of pieces of configuration information. In this case, if the plurality of pieces of configuration information may be embodied as one piece of information, that is, one piece of information includes configuration information of the plurality of uplink control channels, it is equivalent that the network device generates one piece of information. Alternatively, if the plurality of pieces of configuration information are embodied as different pieces of information, that is, one piece of information includes configuration information of one uplink control channel, it is equivalent that the network device generates a plurality of pieces of information.

In this embodiment of the present invention, a time unit may be a subframe, a slot, or a mini-slot. This is not limited in this embodiment of the present invention. In the following, an example in which the time unit is a slot is used for description.

For example, the network device configures PUCCH resources in N formats for the terminal device. For an $i^{th}$ PUCCH format, the network device configures $M_i$ PUCCH resources, where i is an integer greater than or equal to 1 and less than or equal to N. To be specific, the network device configures a total of $\sum_{i=1}^{N} M_i$ PUCCH resources for the terminal device. Each PUCCH resource has a specific PUCCH format. The PUCCH format is either of a short PUCCH and a long PUCCH. In this embodiment of the present invention, a PUCCH resource may be understood as a PUCCH. In other words, an uplink control channel and an uplink control channel resource may be understood as a same concept.

In this embodiment of the present invention, when configuring a PUCCH resource for the terminal device, the network device further configures configuration information of the PUCCH resource, to generate the configuration information of the uplink control channel. The configuration information of the PUCCH resource indicates, for example, a time unit for which the PUCCH resource is feasible, and a time length and/or a location of a resource used for uplink transmission in the time unit for which the PUCCH resource is feasible. It should be noted that, the network device configures the configuration information of the PUCCH resource, and the configuration information may directly indicate a time unit for which the PUCCH resource is feasible, and a time length and/or a location of a resource used for uplink transmission in the time unit for which the PUCCH resource is feasible. Alternatively, the configuration information may indirectly indicate a time unit for which the PUCCH resource is feasible, and a time length and/or a location of a resource used for uplink transmission in the time unit for which the PUCCH resource is feasible. For example, the configuration information may indicate a time length and/or a location of a resource used for downlink transmission, a time length and/or a location of a resource used for uplink transmission, and a length and/or a location of a resource used for a guard period in the time unit for which the PUCCH resource is feasible. Alternatively, the configuration information may indicate a time length and/or a location of a resource used for uplink transmission, a length and/or a location of a resource used for a guard period, and the like in the time unit for which the PUCCH resource is feasible. Based on the configuration information of the PUCCH resource, the terminal device may determine a type of the time unit for which the PUCCH resource is feasible, or determine the time length and/or the location of the resource used for uplink transmission in the time unit for which the PUCCH resource is feasible. In this way, the terminal device can determine, based on configuration information of a time unit for to-be-sent uplink control information, which PUCCH resources are valid. In this way, the terminal device can determine a PUCCH resource that can be used in the time unit for the to-be-sent uplink control information. In this case, the configuration information of the uplink control channel includes the configuration information of the PUCCH resource. In this embodiment of the present invention, the configuration information of the time unit may also be understood as a type of the time unit. For example, the configuration information of the time unit includes the time length and/or the location of the resource used for uplink transmission in the time unit. It should be noted that the configuration information of the time unit may indicate the time length and/or the location of the resource used for uplink transmission in the time unit. Alternatively, the configuration information of the time unit may indirectly indicate the time length and/or the location of the resource used for uplink transmission in the time unit. For example, the configuration information of the time unit may be the time length and/or the location of the resource used for downlink transmission, the time length and/or the location of the resource used for uplink transmission, and the length and/or the location of the resource used for a guard period in the time unit. Alternatively, the configuration information of the time unit may be the time length and/or the location of the resource used for uplink transmission, the length and/or the location of the resource used for a guard period, and the like in the time unit. Based on the configuration information of the time unit, the terminal device may determine the time length and/or the location of the resource used for uplink transmission in the time unit. The time unit may be a slot, a mini-slot, or another length granularity used for uplink control channel transmission.

For example, one slot includes 14 symbols. A quantity of symbols used for uplink transmission in one slot is one of {14, 12, 11, 10, 9, 8, 7, 6, 5, 4, 3, 2, 1}. For example, when configuring a first PUCCH resource for the terminal device, the network device indicates that a format of the first PUCCH resource is a four-symbol PUCCH format, configures that the first PUCCH resource is feasible for a slot in which a quantity of symbols used for uplink transmission is 7, and indicates a symbol location, a frequency location, and the like that are occupied by the first PUCCH in the slot in which the quantity of symbols used for uplink transmission is 7.

Alternatively, for example, when configuring a second PUCCH resource for the terminal device, the network device indicates that a format of the second PUCCH resource is a seven-symbol PUCCH format, configures that the second PUCCH resource is feasible for a slot in which a quantity of symbols used for uplink transmission is 7, and indicates a symbol location, a frequency location, and the like that are occupied by the second PUCCH in the slot in which the quantity of symbols used for uplink transmission is 7.

Alternatively, for example, when configuring a third PUCCH resource for the terminal device, the network device indicates that a format of the third PUCCH resource is a one-symbol PUCCH format, configures that the third PUCCH resource is feasible for a slot in which a quantity of symbols used for uplink transmission is 2, and indicates a symbol location, a frequency location, and the like that are occupied by the third PUCCH in the slot in which the quantity of symbols used for uplink transmission is 2.

In a similar manner, for example, the network device configures 13 PUCCH formats for the terminal device, and configures four PUCCH resources for each PUCCH format, and the network device configures 52 PUCCH resources for the terminal device in total. Each PUCCH resource corresponds to a specific PUCCH format, and corresponds to configuration information of a used slot.

The foregoing describes a case in which the configuration information of the uplink control channel includes the configuration information of the uplink control channel. In another manner, when configuring a PUCCH resource for the terminal device, the network device further configures a time unit set that matches the PUCCH resource. In this case, the configuration information of the uplink control channel includes the information about the time unit set corresponding to the uplink control channel. The time unit may be a slot, a mini-slot, or another length granularity used for uplink control channel transmission. For example, the time unit is a slot in the following descriptions.

Specifically, the network device may divide slots that can be used to send the uplink control information into different slot sets, and configure a corresponding PUCCH resource for each of all or some of the slot sets that are obtained through division, to generate the configuration information of the uplink control channel. Compared with configuring a PUCCH resource for configuration information of a slot, configuring a PUCCH resource for a slot set can reduce a workload of the network device to some extent.

In this embodiment of the present invention, the network device may divide the slots into different slot sets according to time. For example, a radio frame includes 20 slots, and the network device may put the first six slots into one slot set, put the seventh slot to the twelfth slot into one slot set, and so on. Alternatively, the network device may divide the slots into different slot sets according to a quantity of symbols that are included in a slot and used for uplink transmission. For example, slots that include a same quantity of symbols used for uplink transmission are put into one slot set, or slots in which a difference between quantities of symbols used for uplink transmission is less than a preset threshold are put into one slot set. For example, a radio frame includes 20 slots; the first slot, the third slot, and the fifth slot each include six uplink symbols; and the second slot, the fourth slot, and the sixth slot each include five uplink symbols. In this case, the network device may put the first slot, the third slot, and the fifth slot into one slot set, put the second slot, the fourth slot, and the sixth slot into another slot set, and so on. A slot set division manner used by the network device is not limited in this embodiment of the present invention.

S52. The network device sends the configuration information of the first uplink control channel to the terminal device, and the terminal device receives the configuration information of the first uplink control channel.

As described above, the network device may configure the plurality of uplink control channels for the terminal device, and the network device may generate, for each configured uplink control channel, the configuration information of the uplink control channel. Therefore, the network device may generate the plurality of pieces of configuration information. If the plurality of pieces of configuration information are embodied as one piece of information, that is, one piece of information includes the configuration information of the plurality of uplink control channels, the network device may send only the one piece of information to the terminal device. The terminal device receives the one piece of information. In this case, it is equivalent that the terminal device receives the configuration information of the plurality of uplink control channels, and certainly, the configuration information of the first uplink control channel is included. Alternatively, if the plurality of pieces of configuration information are embodied as different pieces of information, that is, one piece of information includes configuration information of one uplink control channel, the network device may send the plurality of pieces of configuration information together to the terminal device, or may send the plurality of pieces of configuration information separately to the terminal device. The plurality of pieces of configuration information include the configuration information of the first uplink control channel.

S53. When the terminal device needs to send the uplink control information in a first time unit, the terminal device determines, from M uplink control channels, the first uplink control channel corresponding to first information, where M is an integer greater than or equal to 2.

The first time unit is, for example, a first slot, and is a slot used by the terminal device to send the uplink control information. In this embodiment of the present invention, the uplink control information includes, for example, a HARQ-ACK or periodic channel state information (Channel State Information, CSI). Therefore, if the uplink control information includes the HARQ-ACK, the uplink control channel in this embodiment of the present invention is an uplink control channel that is configured by the network device for the terminal device and that is used to send the HARQ-ACK; or if the uplink control information includes the periodic CSI, the uplink control channel in this embodiment of the present invention is an uplink control channel that is configured by the network device for the terminal device and that is used to send the periodic CSI.

When the terminal device needs to send the uplink control information, the terminal device can determine a time unit for sending the uplink control information, namely, the first slot. In this case, the terminal device can determine the first information of the first slot. If the configuration information of the uplink control channel includes the configuration information of the uplink control channel, the first information determined by the terminal device includes configuration information of the first slot; or if the configuration information of the uplink control channel includes the information about the time unit set corresponding to the uplink control channel, the first information determined by the terminal device includes information about a slot set to which the first slot belongs, and is used to indicate the slot set to which the first slot belongs. Therefore, the terminal device can determine, based on the first information of the first slot and the configuration information that is of the uplink control channel and that is received in S52, a PUCCH resource that matches the first slot, that is, determine an uplink control channel that is feasible for the first slot. The determined uplink control channel can be used to send the uplink control information.

For example, if the configuration information of the uplink control channel includes the configuration information of the uplink control channel, the terminal device determines the first information of the first slot for sending the uplink control information. For example, the first information indicates that the first slot includes one symbol used for uplink transmission, and then the terminal device determines, based on the configuration information of the uplink control channel, that a PUCCH resource that matches the slot is the third PUCCH resource described above. In this way, the terminal device determines that the PUCCH resource used to transmit the uplink control information is the third PUCCH resource.

Alternatively, if the control channel configuration information includes the information about the time unit set corresponding to the uplink control channel, in addition to sending the configuration information of the uplink control channel to the terminal device, the network device further needs to configure a time unit set division result for the terminal device. For example, if the configuration information of the uplink control channel includes the information about the time unit set corresponding to the uplink control channel, and the network device also configures a slot set division result for the terminal device, the terminal device determines the first information of the first slot for sending the uplink control information. For example, if the first information indicates that a slot set to which the first slot belongs is a slot set 1, and the configuration information of the uplink control channel indicates that a PUCCH resource corresponding to the slot set 1 is a fourth PUCCH resource, the terminal device determines that the PUCCH resource used to transmit the uplink control information is the fourth PUCCH resource.

As described above, the terminal device may determine an available PUCCH resource in the first slot based on the configuration information of the first slot or the information about the slot set to which the first slot belongs and the configuration information that is of the uplink control channel and that is sent by the network device.

In this case, if the terminal device determines, based on the first information and the configuration information of the uplink control channel, that there is only one available PUCCH resource in the first slot, the terminal device determines that the PUCCH resource is the available PUCCH resource. In other words, the terminal device uniquely determines the first uplink control channel.

However, if the terminal device determines, based on the first information and the configuration information of the uplink control channel, that there are a plurality of available PUCCH resources in the first slot, the terminal device further needs to select one PUCCH resource from the plurality of PUCCH resources to send the uplink control information.

As an example, the terminal device and the network device may agree in advance on a rule for selecting one PUCCH resource from a plurality of PUCCH resources. For example, it is specified that a PUCCH resource with the highest frequency domain is selected from the plurality of PUCCH resources as a final PUCCH resource; or it is specified that a PUCCH resource with the lowest frequency domain is selected from the plurality of PUCCH resources as a final PUCCH resource; or a final PUCCH resource may be selected based on another parameter. This is not limited in this embodiment of the present invention. In this manner, the terminal device may directly determine the first uplink control channel, and does not need to interact with the network device too much, thereby saving transmission resources.

As another example, if it is determined, based on the first information and the configuration information of the uplink control channel, that there are a plurality of available PUCCH resources in the first slot, the network device may further send second information to the terminal device. The second information is used to indicate a PUCCH resource that should be selected by the terminal device. After receiving the second information, the terminal device may make a final selection based on the second information. For example, if the terminal device determines, based on the first information and the configuration information of the uplink control channel, that there are a plurality of available PUCCH resources in the first slot, and the plurality of PUCCH resources form a first uplink control channel group, the terminal device may determine the first uplink control channel from the first uplink control channel group based on the second information. The first uplink control channel group includes N uplink control channels, the N uplink control channels match the first information, and the N uplink control channels are a subset of the M uplink control channels, where N is a positive integer. The uplink control channels included in the first uplink control channel group have a same format.

For ease of understanding, methods for determining the first uplink control channel by the terminal device are described below respectively by using an example in which the uplink control information is a HARQ-ACK and an example in which the uplink control information is periodic CSI.

1. The uplink control information is a HARQ-ACK.

The terminal device may determine an available PUCCH resource in the first slot based on the configuration information of the first slot and the respective configuration information of the plurality of configured uplink control channels. For example, the configuration information of the first slot indicates that the first slot includes two symbols used for uplink transmission, and it is assumed that the M uplink control channels are configured for the terminal device. The respective configuration information of the M uplink control channels indicates a quantity of symbols used for uplink transmission that are included in a slot for which an uplink control channel is feasible. For example, the first uplink control channel in the M uplink control channels is feasible for a slot that includes six symbols used for uplink transmission, the second uplink control channel in the M uplink control channels is feasible for a slot that includes eight symbols used for uplink transmission, the third uplink control channel in the M uplink control channels is feasible for a slot that includes two symbols used for uplink transmission, the fourth uplink control channel in the M uplink control channels is feasible for a slot that includes two symbols used for uplink transmission, .... In this case, the terminal device determines, based on the two symbols used for uplink transmission that are included in the first slot, that the first uplink control channel group corresponding to the configuration information of the first slot includes the third uplink control channel and the fourth uplink control channel in the M uplink control channels.

In addition, the network device further sends the second information to the terminal device. For example, the network device adds the second information to control information for scheduling downlink data for the terminal device. In this case, the second information only needs to indicate which PUCCH resource in the first uplink control channel group a PUCCH resource that needs to be selected is. For example, the network device configures 52 PUCCH resources for the terminal device in total. According to the technical solution provided in this embodiment of the present invention, even if the network device needs to further indicate a specific uplink control channel to be selected by the terminal device, there is no need for overheads of $\lceil \log_2 52 \rceil = 6$ bits. For example, if the first uplink control channel group includes eight PUCCH resources, the second information only needs overheads of $\lceil \log_2 8 \rceil = 3$ bits. Apparently, a load of the required indication information is reduced.

2. The uplink control information is periodic CSI.

The terminal device may determine an available PUCCH resource in the first slot based on the configuration information of the first slot and the respective configuration information of the plurality of configured uplink control channels. For example, if the configuration information of the first slot indicates that the first slot includes two symbols used for uplink transmission, the terminal device may determine the first uplink control channel based on the configuration information of the uplink control channel. For periodic CSI feedback, a PUCCH resource is determined based on semi-persistently configured information. This is different from the HARQ-ACK feedback, in which the network device may dynamically add the second information to control information of downlink data corresponding to the HARQ-ACK feedback, so that the terminal device determines the first uplink control channel from the M uplink control channels included in the first uplink control channel group. Therefore, the terminal device determines, from the configured M uplink control channels for sending the periodic CSI, the first uplink control channel corresponding to the first information, instead of the first uplink control channel group.

S54. The terminal device sends the uplink control information to the network device over the first uplink control channel in the first time unit, and the network device receives the uplink control information over the first uplink control channel in the first time unit.

The network device determines the first uplink control channel in the same manner as the terminal device, so that the network device can receive, over the first uplink control channel, the uplink control information sent by the terminal device.

An apparatus provided in an embodiment of the present invention is described below with reference to the accompanying drawings.

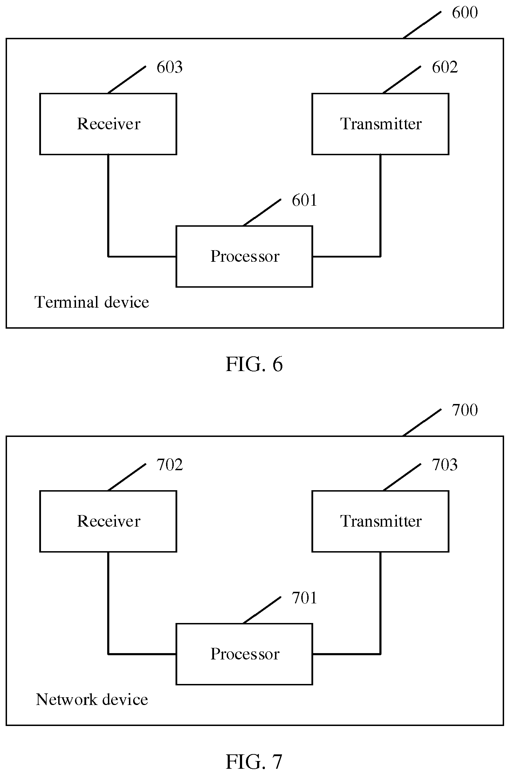

FIG. 6 is a schematic structural diagram of a terminal device 600. The terminal device 600 may implement functions of the terminal device in the foregoing descriptions. The terminal device 600 may include a processor 601 and a transmitter 602. The processor 601 may be configured to perform S53 in the embodiment shown in FIG. 5, and/or configured to support another process of the technology described in this specification. The transmitter 602 may be configured to perform S54 in the embodiment shown in FIG. 5, and/or configured to support another process of the technology described in this specification. Optionally, the terminal device 600 further includes a receiver 603. The receiver 603 may be configured to perform S52 in the embodiment shown in FIG. 5, and/or configured to support another process of the technology described in this specification. The transmitter 602 or the receiver 603 may control a radio frequency apparatus in the terminal device 600 to implement information receiving and sending, or the processor 601 may control the transmitter 602 or the receiver 603 to further control a radio frequency apparatus in the terminal device 600 to implement information receiving and sending. All related content of the steps in the foregoing method embodiment may be cited in function descriptions of corresponding function modules, and details are not described herein again.

FIG. 7 is a schematic structural diagram of a network device 700. The network device 700 may implement functions of the network device in the foregoing descriptions. The network device 700 may include a processor 701 and a receiver 702. The processor 701 may be configured to perform S51 and S53 in the embodiment shown in FIG. 5, and/or configured to support another process of the technology described in this specification. The receiver 702 may be configured to perform S54 in the embodiment shown in FIG. 5, and/or configured to support another process of the technology described in this specification. Optionally, the network device 700 further includes a transmitter 703. The transmitter 703 may be configured to perform S52 in the embodiment shown in FIG. 5, and/or configured to support another process of the technology described in this specification. The transmitter 703 or the receiver 702 may control a radio frequency apparatus in the network device 700 to implement information receiving and sending, or the processor 601 may control the transmitter 703 or the receiver 702 to further control a radio frequency apparatus in the network device 700 to implement information receiving and sending. All related content of the steps in the foregoing method embodiment may be cited in function descriptions of corresponding function modules, and details are not described herein again.

In the embodiments of the present invention, the terminal device 600 or the network device 700 is presented by dividing function modules based on corresponding functions, or may be presented by dividing function modules in an integrated manner. The "module" herein may be an application-specific integrated circuit (application-specific integrated circuit, ASIC), a processor and a memory for executing one or more software or firmware programs, an integrated logic circuit, and/or another component that can provide the foregoing functions.

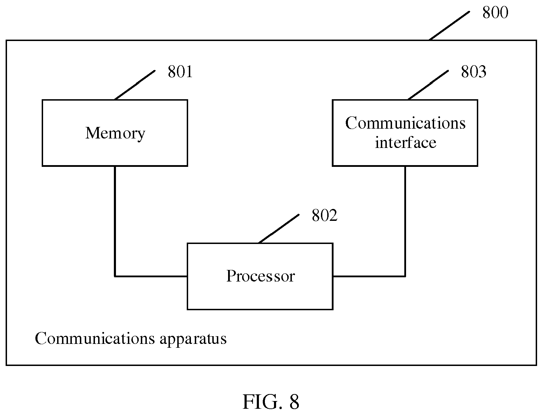

In a simple embodiment, persons skilled in the art may figure out that the terminal device 600 or the network device 700 may be further implemented by using a structure of a communications apparatus shown in FIG. 8.

As shown in FIG. 8, the communications apparatus 800 may include: a memory 801, a processor 802, and a communications interface 803. The memory 801 and the communications interface 803 are connected to the processor 802. The memory 801 is configured to store a computer executable instruction, and when the communications apparatus 800 runs, the processor 802 executes the computer executable instruction stored in the memory 801, so that the communications apparatus 800 performs the method provided in the embodiment shown in FIG. 5. For a specific method, refer to the foregoing descriptions and related descriptions in the accompanying drawings. Details are not described herein again. The communications interface 803 may be implemented by a transceiver, or implemented by an independent receiver and transmitter.

In an example, the transmitter 602 may correspond to the communications interface 803 in FIG. 8. The processor 601 may be built in or independent of the memory 801 of the communications apparatus 800 in a hardware/software form.

In an example, the receiver 702 may correspond to the communications interface 803 in FIG. 8. The processor 701 may be built in or independent of the memory 801 of the communications apparatus 800 in a hardware/software form.

Optionally, the communications apparatus 800 may be a field-programmable gate array (field-programmable gate array, FPGA), an application-specific integrated chip (application specific integrated circuit, ASIC), a system on chip (system on chip, SoC), a central processing unit (central processor unit, CPU), a network processor (network processor, NP), a digital signal processing circuit (digital signal processor, DSP), or a micro controller unit (micro controller unit, MCU), or may be a programmable controller (programmable logic device, PLD) or another integrated chip. Alternatively, the communications apparatus 800 may be an independent network element, for example, the terminal device or the network device described above.

In addition, the terminal device provided in the embodiment shown in FIG. 6 may be implemented in another form. For example, the terminal device includes a sending unit and a processing unit. The processing unit may be configured to perform S53 in the embodiment shown in FIG. 5, and/or configured to support another process of the technology described in this specification. The sending unit may be configured to perform S54 in the embodiment shown in FIG. 5, and/or configured to support another process of the technology described in this specification. Optionally, the terminal device further includes a receiving unit. The receiving unit may be configured to perform S52 in the embodiment shown in FIG. 5, and/or configured to support another process of the technology described in this specification. The sending unit or the receiving unit may control a radio frequency apparatus in the terminal device to implement information receiving and sending, or the processing unit may control the sending unit or the receiving unit to further control a radio frequency apparatus in the terminal device to implement information receiving and sending. All related content of the steps in the foregoing method embodiment may be cited in function descriptions of corresponding function modules, and details are not described herein again.

In addition, the network device provided in the embodiment shown in FIG. 7 may be implemented in another form. For example, the network device includes a receiving unit and a processing unit. The processing unit may be configured to perform S51 and S53 in the embodiment shown in FIG. 5, and/or configured to support another process of the technology described in this specification. The receiving unit may be configured to perform S54 in the embodiment shown in FIG. 5, and/or configured to support another process of the technology described in this specification. Optionally, the network device further includes a sending unit. The sending unit may be configured to perform S52 in the embodiment shown in FIG. 5, and/or configured to support another process of the technology described in this specification. The sending unit or the receiving unit may control a radio frequency apparatus in the network device to implement information receiving and sending, or the processing unit may control the sending unit or the receiving unit to further control a radio frequency apparatus in the network device to implement information receiving and sending. All related content of the steps in the foregoing method embodiment may be cited in function descriptions of corresponding function modules, and details are not described herein again.

The terminal device 600, the network device 700, and the communications apparatus 800 that are provided in the embodiments of the present invention may be configured to perform the method provided in the embodiment shown in FIG. 5. Therefore, for technical effects that can be achieved by the terminal device 600, the network device 700, and the communications apparatus 800, refer to the foregoing method embodiment. Details are not described herein again.

The embodiments of the present invention are described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specified function in one or more processes in the flowcharts and/or in one or more blocks in the block diagrams.

All or some of the foregoing embodiments may be implemented by software, hardware, firmware, or any combination thereof. When software is used to implement the embodiments, all or some of the foregoing embodiments may be implemented in a form of a computer program product. The computer program product includes one or more computer instructions. When the computer program instructions are loaded and executed on a computer, the procedure or functions according to the embodiments of the present invention are all or partially generated. The computer may be a general-purpose computer, a dedicated computer, a computer network, or another programmable apparatus. The computer instruction may be stored in a computer-readable storage medium, or may be transmitted from a computer-readable storage medium to another readable storage medium. For example, the computer instruction may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state drive (Solid State Disk, SSD)), or the like.

Apparently, persons skilled in the art may make various modifications and variations to the embodiments of the present invention without departing from the spirit and scope of this application. This application is intended to cover these modifications and variations provided that they fall within the scope of protection defined by the following claims and their equivalent technologies.

**Claims**

1. A control information sending method, comprising:

    determining, from M uplink control channels, a first uplink control channel corresponding to first information, wherein M is an integer greater than or equal to 2; and
    sending uplink control information to a network device over the first uplink control channel in a first time unit, wherein
    configuration information of the first uplink control channel matches the first information, and the first information is used to indicate configuration information of the first time unit; or
    a time unit set corresponding to the first uplink control channel matches the first information, and the first information is used to indicate a time unit set to which the first time unit belongs; or
    the first uplink control channel belongs to a first uplink control channel group, the first uplink control channel group comprises N uplink control channels, the N uplink control channels match the first information, and the N uplink control channels are a subset of the M uplink control channels, wherein N is a positive integer; and the first information is used to indicate configuration information of the first time unit, or the first information is used to indicate a time unit set to which the first time unit belongs.

2. The method according to claim 1, wherein the configuration information of the first time unit is used to indicate a time length and/or a location of a resource used for uplink transmission in the first time unit, and the configuration information of the first uplink control channel is used to indicate a time length and/or a location of a resource used for uplink transmission in a time unit for which the first uplink control channel is feasible.

3. The method according to claim 1 or 2, before the determining, from M uplink control channels, a first uplink control channel corresponding to first information, further comprising:
   receiving a configuration message that is about the first uplink control channel and that is sent by the network device, wherein the configuration message comprises the configuration information of the first uplink control channel, and/or the configuration message comprises information about the time unit set corresponding to the first uplink control channel.

4. The method according to any one of claims 1 to 3, wherein the first uplink control channel belongs to the first uplink control channel group; and
   before the sending uplink control information to a network device over the first uplink control channel in a first time unit, the method further comprises:

    receiving second information; and
    determining the first uplink control channel from the first uplink control channel group based on the second information.

5. The method according to claim 4, wherein the uplink control channels comprised in the first uplink control channel group have a same format.

6. The method according to any one of claims 1 to 5, wherein
   the at least two uplink control channels are channels used to send hybrid automatic repeat request-acknowledgement information, and the uplink control information comprises the hybrid automatic repeat request-acknowledgement information.

7. The method according to any one of claims 1 to 3, wherein the at least two uplink control channels are uplink control channels that are configured by the network device for a terminal device and that are used to send periodic channel state information, and the uplink control information comprises the periodic channel state information.

8. A control information receiving method, comprising:

    determining, from M uplink control channels, a first uplink control channel corresponding to first information, wherein M is an integer greater than or equal to 2; and
    receiving, over the first uplink control channel in a first time unit, uplink control information sent by a terminal device, wherein
    configuration information of the first uplink control channel matches the first information, and the first information is used to indicate configuration information of the first time unit; or
    a time unit set corresponding to the first uplink control channel matches the first information, and the first information is used to indicate a time unit set to which the first time unit belongs; or
    the first uplink control channel belongs to a first uplink control channel group, the first uplink control channel group comprises N uplink control channels, the N uplink control channels match the first information, and the N uplink control channels are a subset of the M uplink control channels, wherein N is a positive integer; and the first information is used to indicate configuration information of the first time unit, or the first information is used to indicate a time unit set to which the first time unit belongs.

9. The method according to claim 8, wherein the configuration information of the first time unit is used to indicate a time length and/or a location of a resource used for uplink transmission in the first time unit, and the configuration information of the first uplink control channel is used to indicate a time length and/or a location of a resource used for uplink transmission in a time unit for which the first uplink control channel is feasible.

10. The method according to claim 8 or 9, before the determining, from M uplink control channels, a first uplink control channel corresponding to first information, further comprising:
sending a configuration message about the first uplink control channel to the terminal device, wherein the configuration message comprises the configuration information of the first uplink control channel, and/or the configuration message comprises information about the time unit set corresponding to the first uplink control channel.

11. The method according to any one of claims 8 to 10, wherein the first uplink control channel belongs to the first uplink control channel group; and
before the receiving, over the first uplink control channel in a first time unit, uplink control information sent by a terminal device, the method further comprises:
sending second information to the terminal device, wherein the second information is used to instruct the terminal device to determine the first uplink control channel from the first uplink control channel group.

12. The method according to claim 11, wherein the uplink control channels comprised in the first uplink control channel group have a same format.

13. The method according to any one of claims 8 to 12, wherein the at least two uplink control channels are uplink control channels that are configured by the network device for the terminal device and that are used to send hybrid automatic repeat request-acknowledgement information, and the uplink control information comprises the hybrid automatic repeat request-acknowledgement information.

14. The method according to any one of claims 8 to 10, wherein the at least two uplink control channels are uplink control channels that are configured by the network device for the terminal device and that are used to send periodic channel state information, and the uplink control information comprises the periodic channel state information.

15. A terminal device, comprising:

a processor, configured to determine, from M uplink control channels, a first uplink control channel corresponding to first information, wherein M is an integer greater than or equal to 2; and
a transmitter, configured to send uplink control information to a network device over the first uplink control channel in a first time unit, wherein configuration information of the first uplink control channel matches the first information, and the first information is used to indicate configuration information of the first time unit; or
a time unit set corresponding to the first uplink control channel matches the first information, and the first information is used to indicate a time unit set to which the first time unit belongs; or
the first uplink control channel belongs to a first uplink control channel group, the first uplink control channel group comprises N uplink control channels, the N uplink control channels match the first information, and the N uplink control channels are a subset of the M uplink control channels, wherein N is a positive integer; and the first information is used to indicate configuration information of the first time unit, or the first information is used to indicate a time unit set to which the first time unit belongs.

16. The terminal device according to claim 15, wherein the configuration information of the first time unit is used to indicate a time length and/or a location of a resource used for uplink transmission in the first time unit, and the configuration information of the first uplink control channel is used to indicate a time length and/or a location of a resource used for uplink transmission in a time unit for which the first uplink control channel is feasible.

17. The terminal device according to claim 15 or 16, wherein the terminal device further comprises a receiver, configured to:
before the processor determines, from the M uplink control channels, the first uplink control channel corresponding to the first information, receive configuration information that is about the first uplink control channel and that is sent by the network device, wherein the configuration information comprises the configuration information of the first uplink control channel, and/or comprises information about the time unit set corresponding to the first uplink control channel.

18. The terminal device according to any one of claims 15 to 17, wherein the first uplink control channel belongs to the first uplink control channel group, and the terminal device further comprises the receiver; the receiver is configured to receive second information before the transmitter sends the uplink control information to the network device over the first uplink control channel in the first time unit; and the processor is further configured to determine the first uplink control channel from the first uplink control channel group based on the second information.

19. The terminal device according to claim 18, wherein the uplink control channels comprised in the first uplink control channel group have a same format.

20. The terminal device according to any one of claims 15 to 19, wherein the at least two uplink control channels are uplink control channels that are configured by the network device for the terminal device and that are used to send hybrid automatic repeat request-acknowledgement information, and the uplink control information comprises the hybrid automatic repeat request-acknowledgement information.

21. The terminal device according to any one of claims 15 to 17, wherein the at least two uplink control channels are uplink control channels that are configured by the network device for the terminal device and that are used to send periodic channel state information, and the uplink control information comprises the periodic channel state information.

22. A network device, comprising:

a processor, configured to determine, from M uplink control channels, a first uplink control channel corresponding to first information, wherein M is an integer greater than or equal to 2; and
a receiver, configured to receive, over the first uplink control channel in a first time unit, uplink control information sent by a terminal device, wherein
configuration information of the first uplink control channel matches the first information, and the first information is used to indicate configuration information of the first time unit; or
a time unit set corresponding to the first uplink control channel matches the first information, and the first information is used to indicate a time unit set to which the first time unit belongs; or
the first uplink control channel belongs to a first uplink control channel group, the first uplink control channel group comprises N uplink control channels, the N uplink control channels match the first information, and the N uplink control channels are a subset of the M uplink control channels, wherein N is a positive integer; and the first information is used to indicate configuration information of the first time unit, or the first information is used to indicate a time unit set to which the first time unit belongs.

23. The network device according to claim 22, wherein the configuration information of the first time unit is used to indicate a time length and/or a location of a resource used for uplink transmission in the first time unit, and the configuration information of the first uplink control channel is used to indicate a time length and/or a location of a resource used for uplink transmission in a time unit for which the first uplink control channel is feasible.

24. The network device according to claim 22 or 23, wherein the network device further comprises a transmitter, configured to:
before the processor determines, from the M uplink control channels, the first uplink control channel corresponding to the first information, send a configuration message about the first uplink control channel to the terminal device, wherein the configuration message comprises the configuration information of the first uplink control channel, and/or comprises information about the time unit set corresponding to the first uplink control channel.

25. The network device according to any one of claims 22 to 24, wherein the first uplink control channel belongs to the first uplink control channel group, and the terminal device further comprises the transmitter, configured to:
send second information to the terminal device before the receiver receives, over the first uplink control channel in the first time unit, the uplink control information sent by the terminal device, wherein the second information is used to instruct the terminal device to determine the first uplink control channel from the first uplink control channel group.

26. The network device according to claim 25, wherein the uplink control channels comprised in the first uplink control channel group have a same format.

27. The network device according to any one of claims 22 to 26, wherein the at least two uplink control channels are uplink control channels that are configured by the network device for the terminal device and that are used to send hybrid automatic repeat request-acknowledgement information, and the uplink control information comprises the hybrid automatic repeat request-acknowledgement information.

28. The network device according to any one of claims 22 to 24, wherein the at least two uplink control channels are uplink control channels that are configured by the network device for the terminal device and that are used to send periodic channel state information, and the uplink control information comprises the periodic channel state information.

29. A communications apparatus, comprising:

a memory, configured to store computer executable program code, and a processor, wherein when the processor executes the code, the code enables the communications apparatus to implement the method according to any one of claims 1 to 14.

30. A computer-readable storage medium, configured to store a program, wherein when the program is executed, the method according to any one of claims 1 to 14 is implemented.

Subframe

Slot | Slot

15 kHz

Mini-slot | Mini-slot | Mini-slot | Mini-slot | Mini-slot | Mini-slot

FIG. 1A

30
kHz

| Slot | Slot | Slot | Slot |

Mini-slot Mini-slot Mini-slot Mini-slot Mini-slot Mini-slot Mini-slot Mini-slot Mini-slot Mini-slot Mini-slot Mini-slot

FIG. 1B

FIG. 1C

FIG. 2A

FIG. 2B

Eight-symbol PUCCH
for a terminal device 1

Four-symbol PUCCH
for a terminal device 2

FIG. 3

Terminal
device

Network
device

Terminal
device

FIG. 4

```
┌──────────┐                              ┌──────────┐
│ Terminal │                              │ Network  │
│  device  │                              │  device  │
└────┬─────┘                              └────┬─────┘
     │                                         │
     │                    ┌────────────────────┴────────────────────┐
     │                    │    S51. Generate configuration          │
     │                    │ information of a first uplink control    │
     │                    │  channel (where the configuration        │
     │                    │ information of the first uplink control  │
     │                    │    channel includes configuration        │
     │                    │ information of the first uplink control  │
     │                    │ channel, and/or includes information     │
     │                    │ about a time unit set corresponding to   │
     │                    │   the first uplink control channel)      │
     │                    └────────────────────┬────────────────────┘
     │  S52. Configuration information of       │
     │     the first uplink control channel     │
     │◄─────────────────────────────────────────┤
     │                                         │
┌────┴─────────────────────────┐              │
│ S53. Determine, from M uplink │              │
│ control channels, the first uplink│          │
│ control channel corresponding │              │
│     to first information      │              │
└────┬─────────────────────────┘              │
     │  S54. Uplink control information         │
     │   (on the first uplink control channel)  │
     ├─────────────────────────────────────────►│
     │                                         │
```

FIG. 5

600

602

| Transmitter |

601

| Processor |

603

| Receiver |

Terminal device

FIG. 6

700

703

| Transmitter |

701

| Processor |

702

| Receiver |

Network device

FIG. 7

FIG. 8

## INTERNATIONAL SEARCH REPORT

| International application No. |
| --- |
| **PCT/CN2018/090885** |

**A.    CLASSIFICATION OF SUBJECT MATTER**

H04W 72/04(2009.01)i;   H04L 1/18(2006.01)i

According to International Patent Classification (IPC) or to both national classification and IPC

**B.    FIELDS SEARCHED**

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNTXT; CNABS; CNKI; VEN; WOTXT; USTXT; EPTXT; 3GPP: 上行控制信道, 上行控制信息, 混合自动重传应答信息, 信道状态信息, 配置信息, 时间长度, 位置, 时隙, 子帧, 匹配, 符号, 指示, PUCCH, UCI, HARQ-ACK, CSI, subframe, slot, allocation, duration, symbol

**C.    DOCUMENTS CONSIDERED TO BE RELEVANT**

| Category* | Citation of document, with indication, where appropriate, of the relevant passages | Relevant to claim No. |
| --- | --- | --- |
| X | HUAWEI. "PUCCH Resource Allocation for HARQ-ACK and SR" <br> *3GPP TSG RAN WG1 Meeting #89 R1-1706960*, 19 May 2017 (2017-05-19), <br>    sections 2.1 and 3 | 1-30 |
| A | CN 104767595 A (ZTE CORPORATION) 08 July 2015 (2015-07-08) <br>    entire document | 1-30 |
| A | CN 102347815 A (ZTE CORPORATION) 08 February 2012 (2012-02-08) <br>    entire document | 1-30 |
| A | CN 102215577 A (ZTE CORPORATION) 12 October 2011 (2011-10-12) <br>    entire document | 1-30 |
| A | ZTE. "NR PUCCH Resource Allocation" <br> *3GPP TSG RAN WG1 Meeting #88 R1-1701591*, 17 February 2017 (2017-02-17), <br>    sections 1-3 | 1-30 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **31 July 2018** | **23 August 2018** |

| Name and mailing address of the ISA/CN | Authorized officer |
| --- | --- |
| **State Intellectual Property Office of the P. R. China <br> No. 6, Xitucheng Road, Jimenqiao Haidian District, Beijing 100088 <br> China** | |
| Facsimile No. **(86-10)62019451** | Telephone No. |

Form PCT/ISA/210 (second sheet) (January 2015)

| INTERNATIONAL SEARCH REPORT<br>Information on patent family members | | International application No.<br>**PCT/CN2018/090885** |
|---|---|---|

| Patent document<br>cited in search report | | | Publication date<br>(day/month/year) | Patent family member(s) | | | Publication date<br>(day/month/year) |
|---|---|---|---|---|---|---|---|
| CN | 104767595 | A | 08 July 2015 | EP | 3079296 | A1 | 12 October 2016 |
| | | | | EP | 3079296 | A4 | 31 May 2017 |
| | | | | WO | 2015103722 | A1 | 16 July 2015 |
| | | | | US | 2016337089 | A1 | 17 November 2016 |
| CN | 102347815 | A | 08 February 2012 | CN | 102347815 | B | 30 March 2016 |
| CN | 102215577 | A | 12 October 2011 | CN | 102215577 | B | 16 September 2015 |

Form PCT/ISA/210 (patent family annex) (January 2015)

**REFERENCES CITED IN THE DESCRIPTION**

**Patent documents cited in the description**

- CN 201710453514